# EUROPÄISCHE PATENTSCHRIFT

(11) **EP 2 830 850 B1**
(45) Veröffentlichungstag und Bekanntmachung des Hinweises auf die Patenterteilung: **25.05.2016**
(21) Anmeldenummer: 13712544.9
(22) Anmeldetag: 26.03.2013
(51) Int. Cl.: B29C 45/16

(54) **SPRITZGUSSWERKZEUG**
INJECTION MOLDING TOOL
OUTIL DE MOULAGE PAR INJECTION

(30) Priorität: 30.03.2012 DE 102012006579
(43) Veröffentlichungstag der Anmeldung: 04.02.2015
(73) Patentinhaber: GB Boucherie NV, 8870 Izegem (BE)
(72) Erfinder: BOUCHERIE, Bart, Gerard, B-8870 Izegem (BE)
(74) Vertreter: Prinz & Partner mbB
(86) Internationale Anmeldenummer: PCT/EP2013/056351
(87) Internationale Veröffentlichungsnummer: WO 2013/144115

(56) Entgegenhaltungen:
- EP-A1- 0 070 189
- EP-A1- 2 324 980
- WO-A1-99/01055
- WO-A1-2007/082394
- WO-A1-2007/085063
- DE-A1-102005 029 365

## Beschreibung

Die Erfindung betrifft ein Spritzgusswerkzeug mit einem zentralen Werkzeugteil und zwei seitlichen Werkzeugteilen, die relativ zueinander zwischen einer geöffneten und einer geschlossenen Stellung verstellbar sind, wobei mindestens eine Spritzgusskavität vorgesehen ist, die durch ein zentrales Formteil, das am zentralen Werkzeugteil angeordnet ist, ein seitliches Formteil, das am seitlichen Werkzeugteil angeordnet ist, sowie ein weiterverstellbares Formteil definiert ist, das an einem Halter angebracht ist, der um das zentrale Werkzeugteil herum zwischen verschiedenen Positionen mittels eines Antriebs verstellbar ist, wobei der Halter mindestens einen Schlitten aufweist, der verschiebbar an einer Schiene angebracht ist.

Ein solches Spritzgusswerkzeug ist aus der EP 2 324 980 bekannt. Der Halter kann mittels des Antriebs entlang den Seitenflächen des zentralen Werkzeugteils verstellt werden, sodass das weiterverstellbare Formteil beispielsweise zwischen einer ersten Spritzstation, einer Kühlstation, einer zweiten Spritzstation und einer Auswerferstation verstellt werden kann. Das weiterverstellbare Formteil ist dabei so ausgeführt, dass es die Spritzgussrohlinge von Bearbeitungsstation zu Bearbeitungsstation weitertransportiert.

Der Antrieb kann beispielsweise in der Form eines Riementriebs ausgeführt sein, mit dem alle Halter fest gekoppelt sind. Auf diese Weise könnenn alle Halter in einem festen Abstand zueinander gleichzeitig weiterverstellt werden. Die weiter verstellbaren Formteile können vom Halter abgekoppelt werden. Alternativ ist vorgesehen, dass jeder Halter mit einem eigenen Servoantrieb versehen ist. Dies ermöglicht es, die Halter in unterschiedlichen Schrittweiten individuell weiterzuverstellen.

Aus der DE 10 2005 029 365 A1 ist eine Spritzgießmaschine bekannt, bei der eine Umsetzvorrichtung mit Kassetten/Haltevorrichtungen verwendet wird, die mit Borsten bestückt werden können.

Eine ähnliche Spritzgießmaschine ist aus der WO 99/01055 A1 bekannt.

Eine Umsetzstation weist ein paternosterartiges Transportsystem mit Positioniervorrichtungen auf, die eine Linearachse mit verfahrbaren an- und abkoppelbaren Schlitten aufweisen. Halteelemente an den Schlitten haben Haltevorrichtungen, um Gegenstände wie Bürstenkörper oder Bürsten oder zu umspritzende Gegenstände zu halten und zu transportieren.

Die Aufgabe der Erfindung besteht darin, ein Spritzgusswerkzeug der eingangs genannten Art dahingehend weiterzubilden, dass die Halter mit geringem konstruktiven Aufwand flexibel weiterverstellt werden können.

Zur Lösung dieser Aufgabe ist erfindungsgemäß bei einem Spritzgusswerkzeug der eingangs genannten Art vorgesehen, dass wobei der Schlitten und damit der Halter gesteuert mit dem Antrieb koppelbar ist. Die Erfindung beruht auf dem Grundgedanken, keine permanente Kopplung zwischen Halter und Antrieb zu verwenden, sondern nur eine temporäre Kopplung, die wieder aufgehoben werden kann, wenn sich der Halter in der gewünschten Position befindet. Im Vergleich mit einer Lösung, bei welcher jeder Halter über einen eigenen Servoantrieb verfügt, werden die Probleme vermieden, die sich hinsichtlich der Energieversorgung und Signalübertragung zu einem Servomotor ergeben, der eine Vielzahl von Umläufen am zentralen Werkzeugteil durchführen muss. Gegenüber einer Lösung mit einem einzigen Riementrieb, mit dem die Halter fest gekoppelt sind, ergibt sich der Vorteil, dass variable Schrittweiten der Halter möglich sind. Die erfindungsgemäß vorgesehenen Schlitten, die mit einer Schiene zusammenwirken, eignen sich besonders gut zum präzisen und gleichzeitig reibungsarmen Führen der Halter.

Gemäß einer Ausgestaltung der Erfindung ist vorgesehen, dass die beiden seitlichen Werkzeugteile mit zwei Seitenflächen des zentralen Werkzeugteils zusammenwirken und dass der Antrieb an einer Stirnseite des zentralen Werkzeugteils angeordnet ist. Bei dieser Ausgestaltung ist der Antrieb in einem Bereich angeordnet, in welchem viel Platz zur Verfügung steht, sodass das Spritzgusswerkzeug im Bereich der Spritzgusskavitäten ausschließlich im Hinblick auf die spritzgusstechnischen Anforderungen ausgelegt werden kann.

Vorzugsweise ist vorgesehen, dass der Antrieb auf nur einer Stirnseite des zentralen Werkzeugteils angeordnet ist. Diese Ausführungsform beruht auf der Erkenntnis, dass bei einer geeignet steifen Ausgestaltung des Halters eine asymmetrische Verbindung zwischen Halter und Antrieb verwendet werden kann, ohne dass dies negative Auswirkungen auf die präzise Positionierung des weiterverstellbaren Formteils hat. Weiterhin ergeben sich verringerte Kosten für den Antrieb, der nur an einer Seite des Spritzgusswerkzeugs vorhanden sein muss. Schließlich entfällt jeglicher Aufwand für eine Synchronisierung zwischen Antrieben, die auf zwei Seiten des Spritzgusswerkzeugs angeordnet sind.

Gemäß einer bevorzugten Ausführungsform der Erfindung ist vorgesehen, dass der Antrieb mindestens einen Schwenkarm aufweist, der zwischen zwei Stellungen verstellbar ist. Diese Ausführungsform verwendet allgemein ausgedrückt einen hin- und hergehenden Schwenkarm, der einen weiterzuverstellenden Halter an einer ersten Position ergreift und dann in die zweite Position weiterverstellt. Anschließend wird der Schwenkarm vom Halter gelöst, sodass er in die erste Position zurückverstellt und dort den nächsten Halter ergreifen kann.

Wenn eine größere Anzahl von Positionen vorgesehen ist, zwischen denen die einzelnen Halter verstellt werden müssen, wird eine entsprechende Anzahl von Schwenkarmen vorgesehen, sodass die Halter zwischen den einzelnen Schwenkarmen "weitergegeben" werden. Ein Schwenkarm verstellt also einen Halter von einer ersten in eine zweite Position, von wo er mittels eines zweiten Schwenkarms in eine dritte Position verstellt wird, in der er von einem dritten Schwenkarm "abgeholt" und weiterverstellt wird.

Vorzugsweise ist vorgesehen, dass ein innenliegendes Ende des Schwenkarms mit einem Aktor gekoppelt ist, der am zentralen Werkzeugteil angebracht ist. Bei dem Aktor kann es sich beispielsweise um einen Servoantrieb handeln, mit welchem der Schwenkarm präzise zwischen den gewünschten Stellungen verstellt werden kann. Durch die Anbringung des Aktors am zentralen Werkzeugteil ergibt sich ein stabiler und kompakter Aufbau.

Vorzugsweise ist vorgesehen, dass ein außenliegendes Ende des Schwenkarms mit dem Halter gekoppelt werden kann. Hierzu kann vorgesehen sein, dass mindestens das außenliegende Ende des Schwenkarms einen Hub parallel zu dessen Schwenkachse ausführen kann, um mit dem Halter gekoppelt bzw. von diesem gelöst zu werden. Anders ausgedrückt wird das außenliegende Ende des Schwenkarms (oder auch der ganze Schwenkarm) angehoben und von oben auf den Halter aufgesetzt, sodass der Halter mechanisch mit dem Schwenkarm gekoppelt und von diesem weiterverstellt werden kann.

Alternativ kann vorgesehen sein, dass der Schwenkarm teleskopisch nach außen verlängerbar ist, um mit dem Halter gekoppelt bzw. von diesem gelöst zu werden. Bei dieser Ausgestaltung wird das außenliegende Ende, welches beispielsweise gabelförmig ausgeführt sein kann, nach außen verschoben, sodass es mit dem Halter gekoppelt ist und diesen weiterverstellen kann.

Gemäß einer Ausführungsform der Erfindung ist vorgesehen, dass der Schwenkarm als Doppelarm ausgeführt ist und zwei außenliegende Enden aufweist. Bei dieser Ausführungsform kann der Schwenkarm den Halter zwischen insgesamt drei Positionen verstellen, die durch die geometrische Anordnung der Arme zueinander ausgeführt sind. Wenn die beiden Arme des Schwenkarms sich in einem Winkel von 90° zueinander erstrecken, kann der Schwenkarm einen Halter mit seinem ersten Arm aus einer ersten Position um 90° in eine zweite Position verstellen. Nachdem der Schwenkarm vom Halter gelöst ist, wird der Schwenkarm um 90° zurückverstellt, sodass der zweite Arm den Halter in der zweiten Position "abholt" und in eine dritte Position weiterverstellt. Gleichzeitig kann der erste Arm einen zweiten Halter aus der ersten Position in die zweite Position verstellen.

Gemäß einer Alternative zur Verwendung von Schwenkarmen kann vorgesehen sein, dass als Antrieb ein Zugmitteltrieb verwendet wird. Die Halter können mit dem Zugmittel, beispielsweise einer Kette oder einem Riemen, dann gekoppelt werden, wenn sie weiterverstellt werden müssen, und wieder gelöst, wenn sie die neue Position erreicht haben.

Grundsätzlich kann ein einziger Zugmitteltrieb verwendet werden, um die Halter weiterzuverstellen. Gemäß einer Alternative zur Verwendung eines einzigen Zugmitteltriebs kann vorgesehen sein, dass der Antrieb zwei oder mehr Zugmitteltriebe aufweist, die sich alle entlang dem Umfang des zentralen Werkzeugteils erstrecken und denen jeweils ein separater Aktor zugeordnet ist. Die Zugmitteltriebe können mit unterschiedlichen Geschwindigkeiten betrieben werden, sodass der Halter, der zwischen einer ersten und einer zweiten Position einen längeren Verfahrweg zurücklegen muss als andere Halter, mit einem Zugmitteltrieb gekoppelt wird, der eine höhere Verstellgeschwindigkeit hat. Dies ermöglicht, alle Halter innerhalb derselben Zeitspanne aus ihrer jeweils ersten in die jeweils zweite Position weiterzuverstellen.

Alternativ kann vorgesehen sein, dass der Antrieb zwei oder mehr Zugmitteltriebe aufweist, die jeweils entlang eines Teils des Umfangs des zentralen Werkzeugteils angeordnet sind und denen jeweils ein separater Aktor zugeordnet ist. Diese Ausführungsform entspricht dem Grundgedanken der Ausführungsform mit mehreren Schwenkarmen, da auch hier unterschiedliche Unterbaugruppen des Antriebs verwendet werden, deren Funktion darin besteht, den Halter aus einer ersten in eine zweite Position weiterzuverstellen. Aus dieser Position wird der entsprechende Halter dann durch den "nächsten" Zugmitteltrieb in die wiederum nächste Position weiterverstellt.

Vorzugsweise ist vorgesehen, dass der Schlitten an der Schiene mittels mindestens eines Doppelkugellagers im Wesentlichen spielfrei angebracht ist. Insbesondere in Kombination mit zugeordneten Führungsflächen, die relativ zueinander geringfügig versetzt sind, ergibt sich eine kompakte Führung für den Halter, die spielfrei ist.

Gemäß einer Ausgestaltung der Erfindung ist vorgesehen, dass der Halter eine Querstrebe aufweist, die mit dem Schlitten verbunden ist und an der das weiterverstellbare Formteil angebracht ist. Bei dieser Ausgestaltung ist das weiterverstellbare Formteil also an einer starren Brücke angebracht, die sich über die Seitenflächen des zentralen Werkzeugteils erstreckt. Wenn gewünscht, kann eine Schiene sowohl an der oberen Stirnseite als auch der unteren Stirnseite des zentralen Werkzeugteils vorgesehen sein, in denen der Halter dann mittels eines oberen und eines unteren Schlittens geführt ist. Grundsätzlich ist auch denkbar, lediglich einen einzigen Schlitten zu verwenden und die Querstrebe freitragend auszuführend.

Vorzugsweise ist vorgesehen, dass das weiterverstellbare Formteil an der Querstrebe zwischen einer Spritzgussstellung und einer ausgehobenen Stellung verstellbar ist. Bei dieser Ausgestaltung muss also nicht die gesamte Querstrebe verstellt werden, um das weiterverstellbare Formteil vom zentralen Formteil zu lösen. Stattdessen wird nur das weiterverstellbare Formteil verstellt, das mittels einer kompakten Schiebeführung an der Querstrebe angebracht ist. Dadurch kann das weiterverstellbare Formteil beim Schließen der Spritzgussform passiv gegen das zentrale Werkzeugteil verstellt und beim Öffnen des Spritzgusswerkzeugs aktiv durch einen Ausheber ausgehoben werden.

Die Erfindung wird nachfolgend anhand verschiedener Ausführungsformen beschrieben, die in den beigefügten Zeichnungen dargestellt sind. In diesen zeigen:
- Figur 1 in einer schematischen, perspektivischen Ansicht ein erfindungsgemäßes Spritzgusswerkzeug;
- Figur 2 in einer schematischen Draufsicht ein Spritzgusswerkzeug gemäß einer ersten Ausführungsform der Erfindung;
- Figur 3 in einer schematischen, teilgeschnittenen Seitenansicht eine erste Ausführungsvariante der ersten Ausführungsform der Erfindung;
- Figur 4 in einer schematischen Schnittansicht das Spritzgusswerkzeug gemäß der ersten Ausführungsvariante;
- Figur 5 in einer schematischen Schnittansicht einen Schlitten, der an einer Schiene angebracht ist;
- Figur 6 in einer schematischen Seitenansicht die Anordnung der Kugellager des Schlittens von Figur 5;
- Figur 7 in einer schematischen Draufsicht eine zweite Ausführungsvariante der ersten Ausführungsform der Erfindung;
- Figur 8 in einer schematischen Draufsicht ein Spritzgusswerkzeug gemäß einer zweiten Ausführungsform der Erfindung;
- Figur 9 in einer schematischen Draufsicht ein Spritzgusswerkzeug gemäß einer dritten Ausführungsform der Erfindung; und
- Figur 10 das Spritzgusswerkzeug von Figur 9 in einer schematischen Seitenansicht.

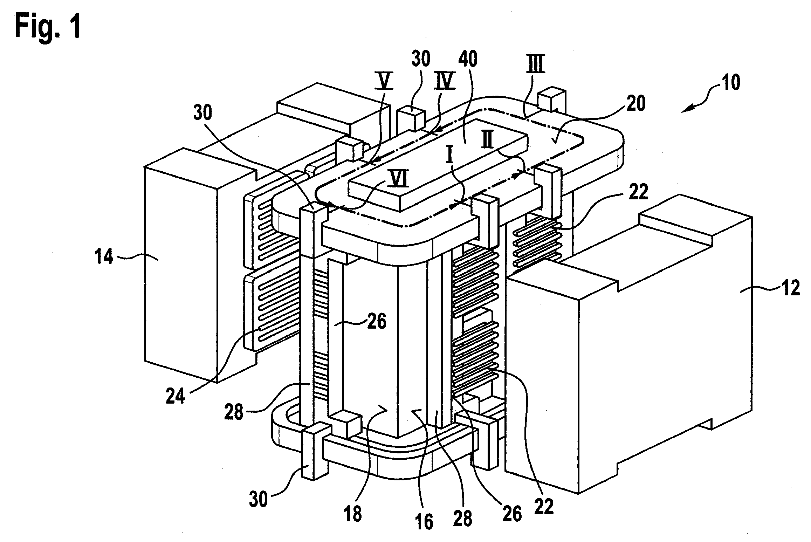

In Figur 1 ist schematisch ein Spritzgusswerkzeug gezeigt, das ein zentrales Werkzeugteil 10 und zwei seitliche Werkzeugteile 12, 14 aufweist. Das zentrale Werkzeugteil ist allgemein blockförmig ausgeführt und weist insgesamt vier Seitenflächen auf, von denen hier nur zwei Seitenflächen 16, 18 sichtbar sind, sowie zwei Stirnseiten, von denen hier nur eine Stirnseite 20 sichtbar ist. An zwei der einander gegenüberliegenden Seitenflächen (hier der Seitenfläche 16 und der sich parallel dazu erstreckenden Seitenfläche) sind zentrale Formteile 22 angeordnet, die mit seitlichen Formteilen 24 zusammenwirken, die an den seitlichen Werkzeugteilen 12, 14 angeordnet sind. Zusammen mit weiterverstellbaren Formteilen 26 können Spritzgusskavitäten gebildet werden, wenn sich das Spritzgusswerkzeug in der geschlossenen Stellung befindet, also das zentrale Werkzeugteil 10 gegen das feststehende seitliche Werkzeugteil 12 und das zweite seitliche Werkzeugteil 14 gegen die zur Seitenfläche 16 parallele Seitenfläche des zentralen Werkzeugteils 10 gedrückt wird.

Das weiterverstellbare Formteil 26 ist an einer Querstrebe 28 angebracht, die sich entlang den Seitenflächen des zentralen Werkzeugteils von einer Stirnseite zur anderen Stirnseite erstreckt. An ihren Enden ist die Querstrebe 28 jeweils mit einem Schlitten 30 verbunden. Die Querstrebe 28 zusammen mit dem Schlitten 30 bildet einen Halter für das weiterverstellbare Formteil. Die beiden seitlichen Werkzeugteile weisen entsprechende Ausnehmungen auf, in denen die Querstrebe 28 aufgenommen ist, wenn sich das Spritzgusswerkzeug in einer geschlossenen Position befindet.

Wie in Figur 1 zu sehen ist, ist das Spritzgusswerkzeug mit mehreren der Halter 28, 30 versehen. Diese können zwischen verschiedenen Positionen um die Seitenflächen des zentralen Werkzeugteils 10 herum verstellt werden. Ein Beispiel für den Umlauf der Halter 28, 30 und damit der weiterverstellbaren Formteile 26 zwischen verschiedenen Positionen ist in Figur 1 gezeigt. In einer ersten Position I kann beispielsweise eine erste Komponente gespritzt werden. Anschließend wird das weiterverstellbare Formteil 26 dort ausgehoben und in eine Position II weiterverstellt, in der eine zweite Komponente gespritzt wird. In einem nächsten Takt wird das bewegliche Formteil 26 dort ausgehoben und in eine Position III verstellt, bei der es sich um eine Kühlstation handeln kann. Im nächsten Maschinentakt wird der entsprechende Halter 28 in eine Position IV weiterverstellt, in der beispielsweise eine dritte Komponente gespritzt werden kann. Im darauffolgenden Maschinentakt wird das weiterverstellbare Formteil 26 dort ausgehoben und in eine Position V weiterverstellt, in der eine vierte Komponente gespritzt werden kann. Im nächsten Maschinentakt wird das entsprechende Formteil 26 (und damit die gespritzten Kunststoffteile) in Station V ausgehoben und in eine Position VI verstellt, bei der es sich um eine Auswurfstation handeln kann. Im Hinblick auf die Effizienz werden vorzugsweise so viele Halter und weiterverstellbare Formteile 26 verwendet, wie Stationen am Spritzgusswerkzeug vorhanden sind. Auf diese Weise kann mit jedem Maschinentakt eine Bearbeitung durchgeführt werden, beispielsweise ein Spritzgussvorgang oder ein Kühlvorgang. Es ist auch möglich, andere Bearbeitungsstationen vorzusehen, beispielsweise eine Station, bei der zusätzliche Bauteile an den spritzgegossenen Bauteilen angebracht werden, oder eine Station zur mechanischen Bearbeitung der Spritzgussrohlinge. Es ist auch möglich, beispielsweise auf die bei Position III vorgesehene Station zu verzichten, sodass die Halter 28, 30 unmittelbar von der Seitenfläche 16 auf die zweite, sich parallel dazu erstreckende Stirnseite verfahren werden. Es ist auch möglich, mit nur einer Station an einer der Seitenflächen oder an beiden Seitenflächen zu arbeiten.

Bei der in Figur 1 gezeigten Ausführungsform handelt es sich um ein Beispiel, das in vielerlei Hinsicht modifiziert werden kann. Beispielsweise können auf der Seitenfläche 16 und der sich parallel dazu erstreckenden Seitenfläche dieselben (also identische) zentralen Formteile 22 angeordnet sein, die mit seitlichen Formteilen 24 zusammenwirken, die an den seitlichen Werkzeugteilen 12, 14 angeordnet sind und wiederum untereinander identisch sind. Zusammen mit den weiterverstellbaren Formteilen 26 werden also Spritzgusskavitäten gebildet, die alle identisch sind.

In Position III (Figur 1) wird dann eine Auswerfstation vorgesehen, ebenso wie in Position VI von Figur 1. Somit werden die Produkte, die an Position I und/oder an Position II gespritzt werden, in Position III ausgeworfen, und die Produkte, die in Position IV und/oder Position V gespritzt werden, werden in Position VI ausgeworfen. Hieraus ergibt sich, dass in einem Maschinentakt, also einem Spritzzyklus, sowohl auf der "Vorderseite" (nämlich der in Figur 1 sichtbaren Seitenfläche 16) als auch auf der "Rückseite" fertige Produkte erzeugt werden, die im nachfolgenden Maschinentakt an der entsprechenden Auswerfstation III oder VI ausgeworfen werden. Das Werkzeug wird dann als 1-Komponenten-Spritzgusswerkzeug betrieben.

Bei den vorhergehenden Beispielen wurde unterstellt, dass die Halter 28, 30 immer in derselben Richtung verstellt werden, also umlaufend. Es ist aber auch möglich, die Halter hin- und zurückzufahren, wenn ein 1-Komponenten-Produkt hergestellt wird. Dann können die Formlinge, die beispielsweise in Position I gespritzt wurden, einmal in Position III ausgeworfen werden und einmal in Position VI, während die Formlinge von Position V einmal in Position VI und einmal in Position III ausgeworfen werden.

Wenn dagegen die Kavitäten in den Positionen I und IV miteinander identisch sind und auch die Kavitäten in den Positionen II und V miteinander identisch sind, dann werden sowohl auf der Vorderseite als auch auf der Rückseite 2-Komponenten-Produkte erzeugt.

Es ist zu sehen, dass die Halter 28, 30, wenn sie von einer Station zur nächsten weiterverstellt werden, unterschiedliche Wege zurücklegen müssen. Die hierfür nötigen, variablen Schrittweiten beim Verstellen zwischen den einzelnen Positionen sind möglich mittels eines in Figur 1 schematisch dargestellten Antriebs 40, mit dem die Halter 28, 30 gesteuert gekoppelt werden können. "Gesteuert gekoppelt" bedeutet, dass sie selektiv zu bestimmten Zeitpunkten mit dem Antrieb verbunden werden, sodass dieser die Halter 28, 30 weiterverstellen kann, und sie ebenso selektiv wieder vom Antrieb gelöst werden können. Insbesondere findet eine Koppelung in einer ersten Position statt, und in einer zweiten Position wird die Koppelung zum Antrieb 40 wieder gelöst. Auf diese Weise können die Halter 28, 30 mit unterschiedlichen Schrittweiten um die Seitenflächen des zentralen Werkzeugteils 10 herum weiterverstellt werden.

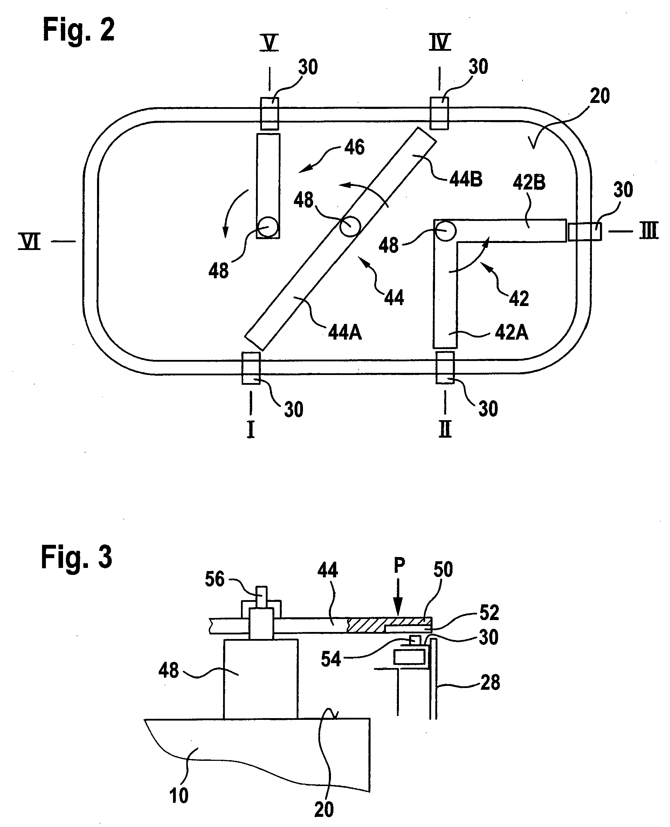

Eine erste Ausgestaltung des Antriebs 40 wird nachfolgend anhand des Figuren 2 bis 4 beschrieben.

Bei der ersten Ausführungsform weist der Antrieb 40 mehrere Schwenkarme 42, 44, 46 auf, die schwenkbar an der Stirnseite 20 des zentralen Werkzeugteils 10 angebracht sind. Bei der gezeigten Ausführungsform werden hierfür Aktoren 48 verwendet, die an der Stirnseite 20 angebracht sind und beispielsweise als Servomotor ausgeführt sein können. Mittels der Aktoren 48 kann jeder Schwenkarm aus der in Figur 2 gezeigten Stellung in der Richtung der Pfeile weiterverstellt werden. Auf diese Weise kann der Schlitten 30, der sich gerade in der Position I befindet, in die Position II weiterverstellt werden, während gleichzeitig der sich an der Position IV befindende Schlitten 30 in die Position V weiterverstellt wird. Gleichzeitig kann durch Verschwenken des Schwenkarms 46 der sich an der Position V befindende Schlitten 30 in die Position I weiterverstellt werden. Schließlich kann durch Verschwenken des Schwenkarms 42 der sich in der Position II befindende Schlitten in die Position III weiterverstellt werden, während der sich in der Position III befindende Schlitten in die Position IV weitergestellt wird.

Der Schwenkarm 42 ist als Doppelarm mit zwei Armen 42A, 42B ausgeführt, die hier im rechten Winkel zueinander angeordnet sind. Auch der Schwenkarm 44 ist ein Doppelarm, wobei seine beiden Arme 44A, 44B auf einer Linie angeordnet sind. Der Schwenkarm 46 ist dagegen einarmig ausgeführt.

In Abhängigkeit von den geometrischen Verhältnissen können die Schwenkarme 42, 44, 46 auch an anderen Stellen an der Stirnseite 20 angeordnet werden. Es ist auch möglich, bei den doppelarmigen Schwenkarmen die Arme in anderen Winkeln relativ zueinander anzuordnen, als dies für die Ausführungsform gemäß Figur 2 dargestellt ist.

Um die Schlitten 30 der Halter lösbar mit den Schwenkarmen zu koppeln, können die Schwenkarme 42, 44, 46 insgesamt einen Hub parallel zu ihrer Schwenkachse ausführen. Dies ist in Figur 3 für den Schwenkarm 44 gezeigt. Das außenliegende Ende 50 ist mit einer Nut 52 versehen, die auf einen Führungszapfen 54 aufgesetzt werden kann, der am Schlitten 30 vorgesehen ist. Sobald der entsprechende Schwenkarm in der Richtung des Pfeils P mit seinem außenliegenden Ende 50 auf den Schlitten 30 aufgesetzt ist, wird die Schwenkbewegung des Schwenkarms in eine Verstellbewegung des entsprechenden Schlittens übertragen. Dabei kann der Führungszapfen 54, bezogen auf die Schwenkachse des entsprechenden Schwenkarms, sich in radialer Richtung in der Nut 52 verstellen, sodass Änderungen des Abstands zwischen der Schwenkachse des entsprechenden Schwenkarms und der Position des Schlittens 30 ausgeglichen werden können.

Zur Verstellung des Schwenkarms 42, 44, 46 in vertikaler Richtung kann beispielsweise ein Aktor 56 verwendet werden, der schematisch in Figur 3 gezeigt ist. Ein vertikaler Hub des außenliegenden Endes 50 der Schwenkhebel kann aber auch konstruktiv in anderer Weise herbeigeführt werden. Es ist auch nicht unbedingt notwendig, jeweils den gesamten Schwenkarm anzuheben. Es kann ausreichend sein, lediglich das außenliegende Ende anzuheben. Außerdem kann die Verbindung zwischen dem Schlitten 30 und dem Schwenkarm in anderer Weise als durch Eingriff des Führungszapfens 54 in die Nut 52 bewerkstelligt werden.

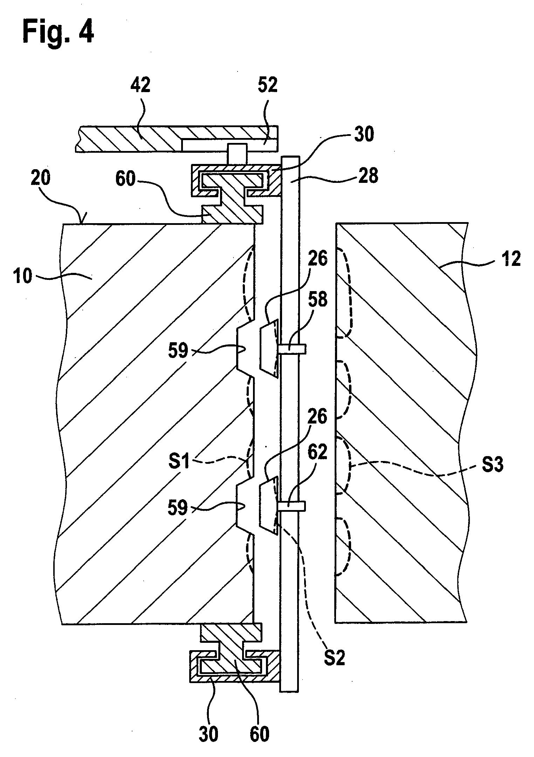

Anhand der Figuren 4 bis 6 wird nachfolgend beschrieben, wie die beweglichen Formteile 26 am zentralen Werkzeugteil 10 angebracht sind.

Zur Führung der Schlitten 30 ist im Bereich jeder Stirnseite 20 des zentralen Werkzeugteils 10 jeweils eine Schiene 60 angebracht. Diese kann beispielsweise mit der entsprechenden Stirnseite verschraubt sein. Die Querstrebe 28 ist an jedem ihrer Enden fest mit einem Schlitten 30 verbunden, der verschiebbar auf den beiden Schienen 60 geführt ist. An der Querstrebe 28 ist verschiebbar das weiterverstellbare Formteil 26 gelagert, beispielsweise mittels eines Zapfens 58, der in der Querstrebe 28 aufgenommen ist. Die beweglichen Formteile 26 können in geeignete Vertiefungen 59 im zentralen Werkzeugteil 10 eingesetzt werden, sodass Spritzgusskavitäten gebildet sind, die aus einem zentralen Teil S1, S2 und einem außenliegenden Teil S3 bestehen.

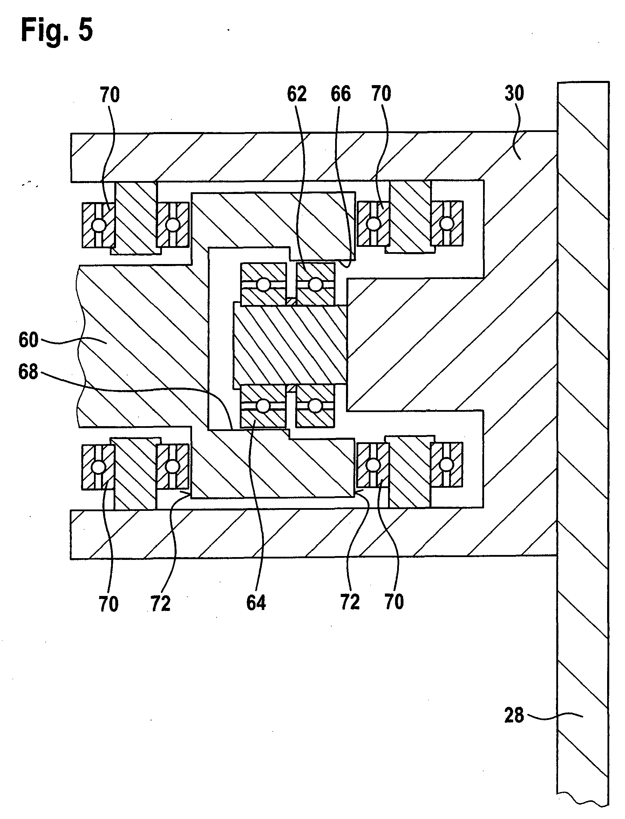

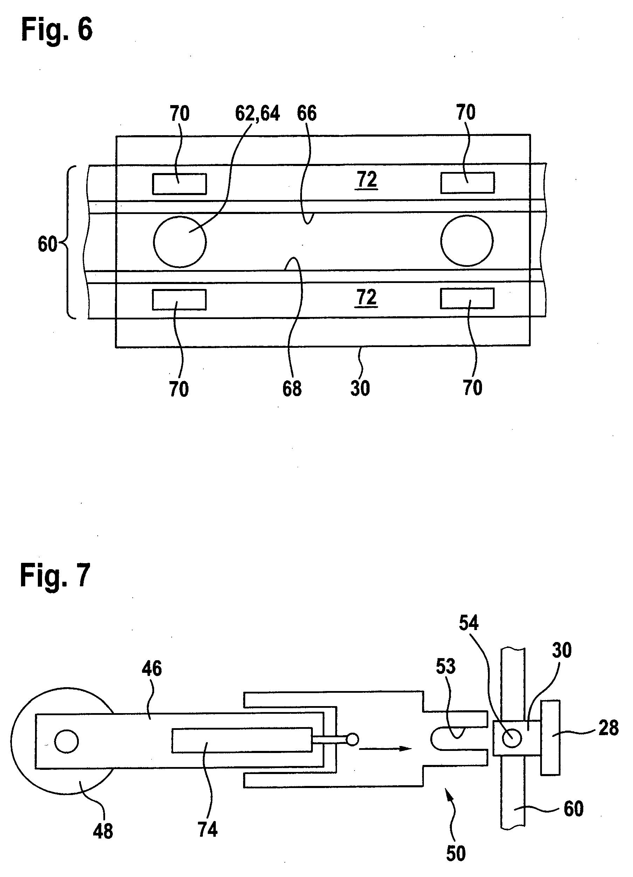

Zur Anbringung der Schlitten 30 an der Schiene 60 sind insbesondere Kugellager geeignet, mittels denen eine präzise Führung in vertikaler Richtung (bezogen auf die Darstellung von Figur 1) sowie in einer Richtung senkrecht zur Erstreckungsrichtung der Schiene 60 erzielt wird. Zur Führung in vertikaler Richtung wird ein Doppelkugellager verwendet, das durch zwei im Abstand voneinander angeordnete Radialkugellager 62, 64 gebildet ist. Diese laufen auf zwei in der Höhe gegeneinander versetzten Führungsbahnen 66, 68, sodass eine reibungsfreie Führung gewährleistet ist. Zur Führung in einer Richtung senkrecht zur Erstreckungsrichtung der Schiene 60 sind Horizontallager 70 vorgesehen, die an Laufflächen 72 angreifen. Wie in der schematischen Seitenansicht von Figur 6 gezeigt ist, weist jeder Schlitten den in Figur 5 gezeigten Lagersatz an zwei voneinander abgewandten Enden auf, sodass eine Kippstabilität um eine Achse parallel zur Erstreckungsrichtung der Querstrebe 28 gegeben ist.

Obwohl in den Figuren 1 und 4 gezeigt ist, dass auch am unteren Ende der Querstrebe 28 ein Schlitten 30 vorgesehen ist, der in einer Schiene 60 geführt ist, kann grundsätzlich auch vorgesehen sein, die Querstrebe 28 freitragend nur mittels eines einzigen Schlittens zu lagern, wenn dieser eine ausreichend stabile Führung bereitstellt.

In Figur 7 ist eine alternative Ausführungsvariante der Schwenkarme gezeigt, die sich hinsichtlich der Koppelung mit den Schlitten 30 unterscheidet. Im Unter-schied zu der in den Figuren 2 bis 4 gezeigten Ausführungsform wird hier keine vertikale, sondern eine radiale Bewegung verwendet, um den Schwenkarm mit dem Schlitten zu koppeln. Konkret ist das außenliegende Ende 50 teleskopisch verschiebbar angebracht, sodass es mittels eines schematisch dargestellten Stellzylinders 74 in der Richtung des Pfeils nach außen verschoben werden kann. Dadurch gelangt eine Gabel mit einem Schlitz 53 in Eingriff mit dem Führungszapfen 54 des entsprechenden Schlittens 30.

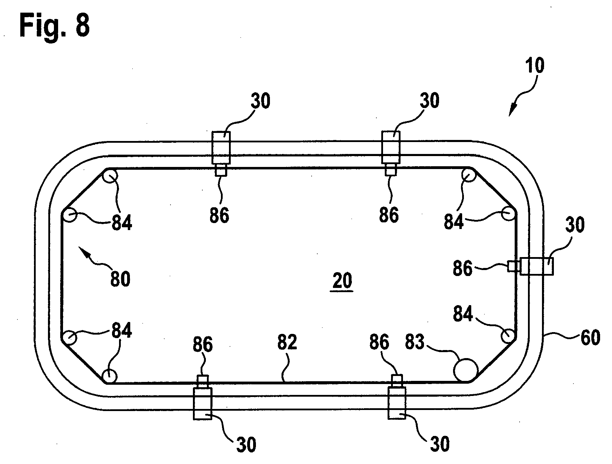

In den Figuren 8 bis 10 sind weitere Ausführungsformen gezeigt, die sich hinsichtlich der Art und Weise der Verstellung der Halter 28, 30 entlang der Schiene 60 voneinander unterscheiden. Im Unterschied zur ersten Ausführungsform, bei der Schwenkarme zum Weiterverstellen der Schlitten 30 verwendet werden, wird bei der Ausführungsform gemäß der Figuren 8 bis 10 der Antrieb 40 durch Zugmitteltriebe 80 gebildet.

Die Zugmitteltriebe 80 sind bei den nachfolgend beschriebenen Ausführungsformen durch Riementriebe gebildet. Es können aber auch andere Zugmitteltriebe verwendet werden, die beispielsweise eine umlaufende Kette, ein Seil oder ein anderes Zugmittel verwenden.

Bei der Ausführungsform gemäß Figur 8 wird ein einziger umlaufender Riemen 82 verwendet, der entlang einer Antriebswalze 83 und mehrerer Umlenkrollen 84 in der Nähe der Schiene 60 geführt ist. Jeder Schlitten 30 ist mit einer Koppelvorrichtung 86 versehen, mittels der er gesteuert mit dem Riemen 82 gekoppelt werden kann. Die Koppelvorrichtung 86 kann durch eine Anlagefläche und einer mit dieser zusammenwirkenden Spannbacke gebildet sein, mit denen der entsprechende Schlitten 30 an den Riemen 82 gekoppelt werden kann, beispielsweise mittels eines Servomotors, eines elektromagnetischen Stelltriebs, mittels Federkraft oder pneumatisch.

Die Schlitten 30 können mittels des Riementriebs 80 in die jeweils nächste Position weiterverstellt werden. Dies kann dadurch geschehen, dass die Schlitten 30 mittels der Koppelvorrichtungen dann mit dem kontinuierlich umlaufenden Riemen 82 gekoppelt werden, wenn sie zwischen zwei Maschinentakten von einer Position in die nächste verstellt werden müssen. Sobald die nächste Position erreicht ist, werden die Schlitten dort abgekoppelt. Es ist auch möglich, die Schlitten 30 erst mit dem stehenden Riemen 82 zu koppeln und diesen dann anzutreiben.

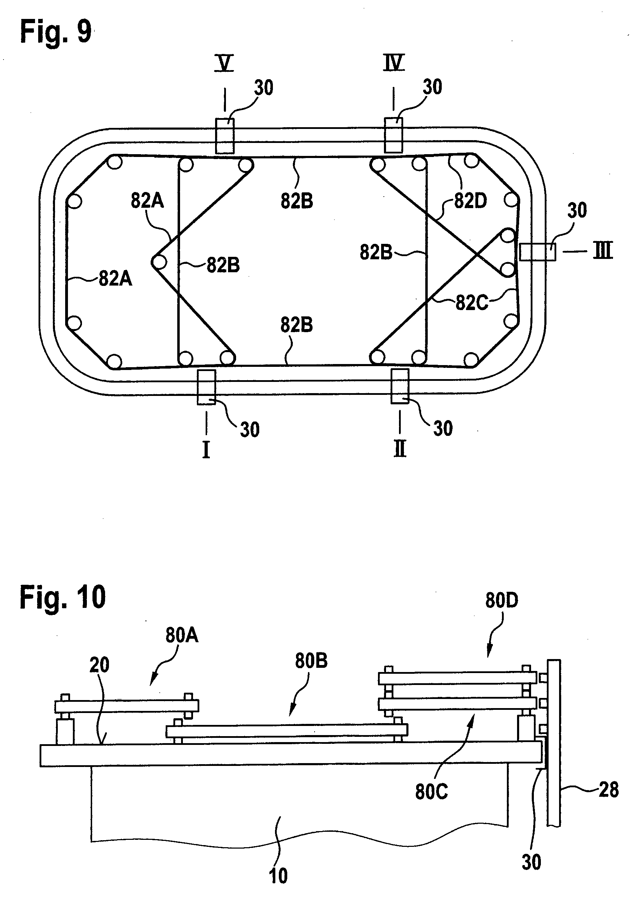

In den Figuren 9 und 10 ist eine dritte Ausführungsform gezeigt, die ebenso wie die zweite Ausführungsform einen Riementrieb als Antrieb 40 verwendet, jedoch hinsichtlich der Art und Weise, wie die Halter 28, 30 weiterverstellt werden, Ähnlichkeit mit der ersten Ausführungsform habt. Bei der dritten Ausführungsform werden mehrere separate Riementriebe 80A, 80B, 80C und 80D verwendet, die jeweils zum Weiterverstellen zwischen zwei bestimmten Positionen vorgesehen sind, sodass eine "Übergabe" der Schlitten von Station zu Station zu einem anderen Riementrieb erfolgt. Aus der Position I wird ein Schlitten 30 mittels des Riemens 82B des Riementriebs 80B in die zweite Position II verstellt. Von dort kann er mittels des Riemens 82C des Riementriebs 80C in die Position III verstellt werden. Von dort ist es der Riemen 82D des Riementriebs 80D, der den Schlitten in die Position IV weiterverstellen kann. Dort kann er wiederum mit dem Riemen 82B des Riementriebs 80B gekoppelt werden, um in die fünfte Position zu gelangen. Zum Weiterverstellen aus der fünften Position in die Position I wird der Schlitten 30 mit dem Riemen 82A des Riementriebs 80A gekoppelt.

Allen Ausführungsformen ist gemeinsam, dass die Halter des weiterverstellbaren Formteils, hier konkret die Schlitten 30, lösbar mit einem Antrieb gekoppelt werden können, um sie aus einer Position in eine andere Position weiterzuverstellen. Die lösbare Koppelung führt zu einer hohen Flexibilität, da das Spritzgusswerkzeug mit wenig Aufwand umgerüstet werden kann. Beispielsweise kann von einer Konstellation mit zwei verschiedenen Spritzstationen auf einer Seitenfläche 16 umgerüstet werden in eine Konfiguration mit nur einer einzigen Spritzposition, und der Antrieb kann mit wenig Aufwand so modifiziert werden, dass die Halter dann zwischen den in der neuen Konfiguration nötigen Positionen verstellt werden.

## Patentansprüche

1. Spritzgusswerkzeug mit einem zentralen Werkzeugteil (10) und zwei seitlichen Werkzeugteilen (12, 14), die relativ zueinander zwischen einer geöffneten und einer geschlossenen Stellung verstellbar sind, wobei mindestens eine Spritzgusskavität (S) vorgesehen ist, die durch ein zentrales Formteil (22), das am zentralen Werkzeugteil (10) angeordnet ist, ein seitliches Formteil (24), das am seitlichen Werkzeugteil (12, 14) angeordnet ist, sowie ein weiterverstellbares Formteil (26) definiert ist, das an einem Halter (28, 30) angebracht ist, der um das zentrale Werkzeugteil (30) herum zwischen verschiedenen Positionen (I bis IV) mittels eines Antriebs (40) verstellbar ist, wobei der Halter (28, 30) mindestens einen Schlitten (30) aufweist, der verschiebbar an einer Schiene (60) angebracht ist, **dadurch gekennzeichnet, dass** der Schlitten (30) und damit der Halter (28, 30) gesteuert mit dem Antrieb (40) koppelbar ist.

2. Spritzgusswerkzeug nach Anspruch 1, **dadurch gekennzeichnet, dass** die beiden seitlichen Werkzeugteile (12, 14) mit zwei Seitenflächen (16) des zentralen Werkzeugteils (10) zusammenwirken und dass der Antrieb (40) an einer Stirnseite (20) des zentralen Werkzeugteils (10) angeordnet ist.

3. Spritzgusswerkzeug nach Anspruch 2, **dadurch gekennzeichnet, dass** der Antrieb (40) auf nur einer Stirnseite (20) des zentralen Werkzeugteils (10) angeordnet ist.

4. Spritzgusswerkzeug nach einem der vorhergehenden Ansprüche, **dadurch gekennzeichnet, dass** der Antrieb (40) mindestens einen Schwenkarm (42, 44, 46) aufweist, der zwischen zwei Stellungen verstellbar ist.

5. Spritzgusswerkzeug nach Anspruch 4, **dadurch gekennzeichnet, dass** ein innenliegendes Ende des Schwenkarms (42, 44, 46) mit einem Aktor (48) gekoppelt ist, der am zentralen Werkzeugteil (10) angebracht ist.

6. Spritzgusswerkzeug nach Anspruch 4 oder Anspruch 5, **dadurch gekennzeichnet, dass** ein außenliegendes Ende (50) des Schwenkarms (42, 44, 46) mit dem Halter (28, 30) gekoppelt werden kann.

7. Spritzgusswerkzeug nach Anspruch 6, **dadurch gekennzeichnet, dass** mindestens das außenliegende Ende (50) des Schwenkarms (42, 44, 46) einen Hub parallel zu dessen Schwenkachse ausführen kann, um mit dem Halter (28, 30) gekoppelt bzw. von diesem gelöst zu werden.

8. Spritzgusswerkzeug nach Anspruch 6, **dadurch gekennzeichnet, dass** der Schwenkarm (42, 44, 46) teleskopisch nach außen verlängerbar ist, um mit dem Halter (28, 30) gekoppelt bzw. von diesem gelöst zu werden.

9. Spritzgusswerkzeug nach einem der Ansprüche 4 bis 8, **dadurch gekennzeichnet, dass** der Schwenkarm (42, 44) als Doppelarm ausgeführt ist und zwei außenliegende Enden (50) aufweist.

10. Spritzgusswerkzeug nach einem der vorhergehenden Ansprüche, **dadurch gekennzeichnet, dass** der Antrieb (40) mindestens einen Zugmitteltrieb (80; 80A, 80B, 80C, 80D) aufweist.

11. Spritzgusswerkzeug nach Anspruch 10, **dadurch gekennzeichnet, dass** der Antrieb (40) einen oder mehrere Zugmitteltriebe (80) aufweist, die sich alle entlang dem Umfang des zentralen Werkzeugteils (10) erstrecken und denen jeweils ein separater Antrieb zugeordnet ist.

12. Spritzgusswerkzeug nach Anspruch 10, **dadurch gekennzeichnet, dass** der Antrieb zwei oder mehr Zugmitteltriebe (80A, 80B, 80C, 80D) aufweist, die jeweils entlang einem Teil des Umfangs des zentralen Werkzeugteils (10) angeordnet sind und denen jeweils ein separater Antrieb zugeordnet ist.

13. Spritzgusswerkzeug nach einem der Ansprüche 10 bis 12, **dadurch gekennzeichnet, dass** der Halter (28, 30) mit einer Koppelvorrichtung (86) versehen ist, mittels der er mit dem Zugmitteltrieb (80) gesteuert gekoppelt werden kann.

14. Spritzgusswerkzeug nach einem der vorhergehenden Ansprüche, **dadurch gekennzeichnet, dass** der Schlitten (30) mittels Wälzlagern, einer Rollenführung und/oder einer Linearführung an der Schiene (60) gelagert ist.

15. Spritzgusswerkzeug nach Anspruch 14, **dadurch gekennzeichnet, dass** der Schlitten (30) an der Schiene (60) mittels mindestens eines Doppelkugellagers (62, 64) im Wesentlichen spielfrei angebracht ist.

16. Spritzgusswerkzeug nach einem der vorhergehenden Ansprüche, **dadurch gekennzeichnet, dass** der Halter (28, 30) eine Querstrebe (28) aufweist, die mit dem Schlitten (30) verbunden ist und an der das weiterverstellbare Formteil (26) angebracht ist.

17. Spritzgusswerkzeug nach Anspruch 16, **dadurch gekennzeichnet, dass** das weiterverstellbare Formteil (26) an der Querstrebe (28) zwischen einer Spritzgussstellung und einer ausgehobenen Stellung verstellbar ist.

## Claims

1. An injection molding tool comprising a central tool part (10) and two lateral tool parts (12, 14) which are shiftable relative to each other between an open and a closed position, at least one injection molding cavity (S) being provided which is defined by a central mold part (22) which is arranged on the central tool part (10), by a lateral mold part (24) which is arranged on the lateral tool part (12, 14), and by a movable mold part (26) which is mounted to a holder (28, 30) which is shiftable around the central tool part (30) between various positions (I to IV) by means of a drive (40), the holder (28, 30) including at least one carriage (30) which is shiftably mounted to a rail (60), **characterized in that** the carriage (30) and thus the holder (28, 30) can be coupled to the drive (40) in a controlled manner.

2. The injection molding tool according to claim 1, **characterized in that** the two lateral tool parts (12, 14) cooperate with two side faces (16) of the central tool part (10), and that the drive (40) is arranged on an end face (20) of the central tool part (10).

3. The injection molding tool according to claim 2, **characterized in that** the drive (40) is arranged on one end face (20) only of the central tool part (10).

4. The injection molding tool according to any of the preceding claims, **characterized in that** the drive (40) includes at least one swivel arm (42, 44, 46) which is shiftable between two positions.

5. The injection molding tool according to claim 4, **characterized in that** an inner end of the swivel arm (42, 44, 46) is coupled to an actuator (48) which is mounted at the central tool part (10).

6. The injection molding tool according to claim 4 or claim 5, **characterized in that** an outer end (50) of the swivel arm (42, 44, 46) can be coupled to the holder (28, 30).

7. The injection molding tool according to claim 6, **characterized in that** at least the outer end (50) of the swivel arm (42, 44, 46) can perform a stroke parallel to the swivel axis thereof, in order to be coupled to or released from the holder (28, 30).

8. The injection molding tool according to claim 6, **characterized in that** the swivel arm (42, 44, 46) can be telescopically extended to the outside, in order to be coupled to or released from the holder (28, 30).

9. The injection molding tool according to any of claims 4 to 8, **characterized in that** the swivel arm (42, 44) is designed as a double arm and includes two outer ends (50).

10. The injection molding tool according to any of the preceding claims, **characterized in that** the drive (40) includes at least one traction drive (80; 80A, 80B, 80C, 80D).

11. The injection molding tool according to claim 10, **characterized in that** the drive (40) includes one or more traction drives (80) which all extend along the circumference of the central tool part (10) and to each of which a separate drive is associated.

12. The injection molding tool according to claim 10, **characterized in that** the drive includes two or more traction drives (80A, 80B, 80C, 80D) which each are arranged along a part of the circumference of the central tool part (10) and to each of which a separate drive is associated.

13. The injection molding tool according to any of claims 10 to 12, **characterized in that** the holder (28, 30) is provided with a coupling device (86) by means of which it can be coupled to the traction drive (80) in a controlled manner.

14. The injection molding tool according to any of the preceding claims, **characterized in that** the carriage (30) is mounted on the rail (60) by means of anti-friction bearings, a roller guideway and/or a linear guideway.

15. The injection molding tool according to claim 14, **characterized in that** the carriage (30) is mounted on the rail (60) substantially without clearance by means of at least one double ball bearing (62, 64).

16. The injection molding tool according to any of the preceding claims, **characterized in that** the holder (28, 30) includes a transverse strut (28) which is connected with the carriage (30) and to which the movable mold part (26) is mounted.

17. The injection molding tool according to claim 16, **characterized in that** the movable mold part (26) is shiftable on the transverse strut (28) between an injection molding position and an extracted position.

## Revendications

1. Outil de moulage par injection, comportant une pièce d'outil centrale (10) et deux pièces d'outil latérales (12, 14) qui sont aptes à être déplacées les unes par rapport aux autres entre une position ouverte et une position fermée, au moins une cavité (S) de moulage par injection étant prévue, laquelle est définie par une pièce de moule centrale (22) agencée sur la pièce d'outil centrale (10), une pièce de moule latérale (24) agencée sur la pièce d'outil latérale (12, 14), et une pièce de moule mobile (26) agencée sur un support (28, 30) qui est apte à être déplacé entre différentes positions (I à IV) autour de la pièce d'outil centrale (30) au moyen d'un entraînement (40), le support (28, 30) présentant au moins un chariot (30) qui est monté déplaçable sur un rail (60), **caractérisé en ce que** le chariot (30) et ainsi le support (28, 30) peuvent être couplés à l'entraînement (40) de manière commandée.

2. Outil de moulage par injection selon la revendication 1, **caractérisé en ce que** les deux pièces d'outil latérales (12, 14) coopèrent avec deux faces latérales (16) de la pièce d'outil centrale (10) et **en ce que** l'entraînement (40) est agencé sur une face frontale (20) de la pièce d'outil centrale (10).

3. Outil de moulage par injection selon la revendication 2, **caractérisé en ce que** l'entraînement (40) est agencé sur une seule face frontale (20) de la pièce d'outil centrale (10).

4. Outil de moulage par injection selon l'une des revendications précédentes, **caractérisé en ce que** l'entraînement (40) présente au moins un bras pivotant (42, 44, 46) déplaçable entre deux positions.

5. Outil de moulage par injection selon la revendication 4, **caractérisé en ce qu'**une extrémité intérieure du bras pivotant (42, 44, 46) est couplée à un actionneur (48) qui est agencé sur la pièce d'outil centrale (10).

6. Outil de moulage par injection selon la revendication 4 ou la revendication 5, **caractérisé en ce qu'**une extrémité extérieure (50) du bras pivotant (42, 44, 46) est apte à être couplée au support (28, 30).

7. Outil de moulage par injection selon la revendication 6, **caractérisé en ce qu'**au moins l'extrémité extérieure (50) du bras pivotant (42, 44, 46) est apte à réaliser une course parallèle à son axe de pivotement pour être couplée au support (28, 30) ou être détachée de celui-ci.

8. Outil de moulage par injection selon la revendication 6, **caractérisé en ce que** le bras pivotant (42, 44, 46) est apte à être rallongé vers l'extérieur de manière télescopique pour être couplé au support (28, 30) ou être détaché de celui-ci.

9. Outil de moulage par injection selon l'une des revendications 4 à 8, **caractérisé en ce que** le bras pivotant (42, 44) est réalisé sous forme de bras double et présente deux extrémités extérieures (50).

10. Outil de moulage par injection selon l'une des revendications précédentes, **caractérisé en ce que** l'entraînement (40) présente au moins un entraînement par traction (80 ; 80A, 80B, 80C, 80D).

11. Outil de moulage par injection selon la revendication 10, **caractérisé en ce que** l'entraînement (40) présente un ou plusieurs entraînements par traction (80) qui s'étendent tous le long de la périphérie de la pièce d'outil centrale (10) et à chacun desquels un entraînement séparé est associé.

12. Outil de moulage par injection selon la revendication 10, **caractérisé en ce que** l'entraînement présente deux entraînements par traction (80A, 80B, 80C, 80D) ou plus qui sont chacun agencés le long d'une partie de la périphérie de la pièce d'outil centrale (10) et à chacun desquels un entraînement séparé est associé.

13. Outil de moulage par injection selon l'une des revendications 10 à 12, **caractérisé en ce que** le support (28, 30) est pourvu d'un dispositif de couplage (86) au moyen duquel il est apte à être couplé de manière commandée à l'entraînement par traction (80).

14. Outil de moulage par injection selon l'une des revendications précédentes, **caractérisé en ce que** le chariot (30) est monté sur le rail (60) au moyen de paliers à roulement, d'un guidage à rouleaux et/ou d'un guidage linéaire.

15. Outil de moulage par injection selon la revendication 14, **caractérisé en ce que** le chariot (30) est monté sur le rail (60) sensiblement sans jeu au moyen d'au moins un double roulement à billes (62, 64).

16. Outil de moulage par injection selon l'une des revendications précédentes, **caractérisé en ce que** le support (28, 30) présente une traverse (28) qui est reliée au chariot (30) et sur laquelle la pièce de moule mobile (26) est agencée.

17. Outil de moulage par injection selon la revendication 16, **caractérisé en ce que** la pièce de moule mobile (26) est déplaçable sur la traverse (28) entre une position de moulage par injection et une position remontée.
